# DEMANDE DE BREVET EUROPEEN

(11) **EP 2 492 078 A1**
(43) Date de publication de la demande: **29.08.2012**
(21) Numéro de dépôt: 12290042.6
(22) Date de dépôt: 07.02.2012
(51) Int. Cl.: B29C 45/14, B29C 45/00, B29C 45/16

(54) **Dispositif pour réaliser simultanément une pluralité de pièces moulées avec au moins deux matériaux de moulage**

(30) Priorité: 25.02.2011 FR 1100568
(71) Demandeur: International Plastic Industrie, 45170 Chilleurs aux Bois (FR)
(72) Inventeur: Feuillas, Patrick, 45470 Trainou (FR); Joannet, Olivier, 45330 Malesherbes (FR)
(74) Mandataire: Flavenot, Bernard

(57) **Abrégé**

La présente invention concerne les dispositifs pour réaliser simultanément plusieurs pièces moulées 10 avec au moins deux matériaux de moulage 11, 12.

Le dispositif comporte un moule comprenant un plateau fixe 21 et un plateau mobile 22 apte à prendre deux positions P1, P2 par rapport au plateau fixe et, dans l'une P1 des deux positions, définissant avec le plateau fixe des empreintes en creux globales 23 comportant chacune une partie 24 constituant l'empreinte en creux d'une pièce à mouler 10 et une autre partie 25 constituant l'empreinte en creux d'un canal d'alimentation 126, 226 dont une extrémité 27 débouche dans l'empreinte en creux 24, les secondes extrémités des canaux d'alimentation 126, 226 constituant une entrée d'alimentation unique 41, le plateau mobile 22 étant, dans l'autre position P2, éloigné du plateau fixe 21 ; une première buse unique 60 pour injecter le premier matériau 11 et dont la sortie est reliée à l'entrée d'alimentation 41 ; une pluralité de secondes buses 62 pour injecter le second matériau 12 dans chacun des canaux d'alimentation 126, 226, en un point 42 situé entre l'extrémité 27 et l'entrée 41 ; et des moyens pour maintenir la pression d'injection du matériau en sortie de la buse 60 à une valeur au moins égale à celle de la pression d'alimentation du second matériau en sortie des secondes buses 62.

## Description

La présente invention concerne les dispositifs pour réaliser simultanément une pluralité de pièces moulées avec au moins deux matériaux de moulage.

On connaît déjà des dispositifs pour réaliser une pièce moulée avec au moins deux matériaux de moulage, comme par exemple celui qui est décrit dans le FR-A-2901504 auquel correspond le W02007/138186.

Le dispositif selon ces deux documents comporte essentiellement deux plateaux dont l'un est mobile par rapport à l'autre et formant une empreinte globale quand ils coopèrent entre eux et, montées en coopération avec cette empreinte, deux buses d'injection, l'une pour injecter un premier matériau de moulage et l'autre pour injecter un second matériau de moulage.

Selon le FR-A-2901504 cité ci-dessus, le dispositif est conçu pour la réalisation d'une seule pièce, essentiellement parce que les sorties des deux buses comportent respectivement des moyens d'obturation commandables de façon synchronisée. Mais ce dispositif n'est pas opérationnel pour la réalisation simultanée de plusieurs pièces, ce qui est d'ailleurs confirmé dans le W02007/138186 correspondant puisque la description du FR-A-2901504 a été complétée avec essentiellement deux modes de réalisation supplémentaires qui pallient les inconvénients du dispositif selon le FR-A-2901504 qui ne permettait pas le moulage simultané de plusieurs pièces.

C'est ainsi que, dans le W02007/138186, il est proposé, en plus de ceux décrits dans le FR-A-2901504, deux autres modes de réalisation d'un dispositif pour réaliser simultanément, par moulage, plusieurs pièces à la fois, à savoir un premier mode de réalisation avec un clapet anti-retour dans chaque canal d'alimentation, et un second mode de réalisation ne comportant pas de clapet anti-retour, mais comprenant en revanche une pluralité de paires de canaux d'alimentation, chaque canal de chaque paire débouchant en deux endroits différents de l'empreinte de la pièce à mouler.

Les dispositifs de moulage selon ces deux modes de réalisation permettent d'obtenir le résultat escompté, mais présentent des inconvénients. En ce qui concerne le premier mode de réalisation : la présence d'un clapet anti-retour dans chaque canal d'alimentation augmente considérablement le prix de revient du dispositif de moulage et diminue sa rapidité de fonctionnement entre chaque série de pièces à mouler, mais aussi sa fiabilité. En ce qui concerne le second mode de réalisation : le fait de munir le dispositif d'une pluralité de paires de canaux d'alimentation débouchant en deux endroits différents des empreintes des pièces à mouler a pour conséquence d'augmenter l'encombrement du moule, son prix de revient et donc corrélativement le coût de revient global du dispositif de moulage.

De tels dispositifs sont aussi décrits par exemple dans les JP-A-8118418 et GB-A-2340431. Mais ils présentent sensiblement les mêmes inconvénients que ceux mentionnés ci-dessus.

La présente invention a donc pour but de réaliser un dispositif permettant de réaliser simultanément et beaucoup plus rapidement que les dispositifs similaires de l'art antérieur, une pluralité de pièces moulées avec au moins deux matériaux de moulage, qui soit d'une structure plus simple et donc moins onéreuse que les dispositifs de l'art antérieur, notamment ceux rappelés ci-dessus.

Plus précisément, la présente invention a pour objet un dispositif permettant de réaliser simultanément une pluralité de pièces moulées avec au moins deux matériaux de moulage dont les caractéristiques sont définies dans la revendication 1 annexée.

D'autres caractéristiques et avantages de la présente invention apparaîtront au cours de la description suivante donnée en regard des dessins annexés à titre illustratif mais nullement limitatif, dans lesquels :
La figure 1 est une vue en coupe schématique d'un mode de réalisation du dispositif selon l'invention pour réaliser simultanément une pluralité de pièces moulées avec au moins deux matériaux de moulage, et
La figure 2 est une vue schématique d'un élément obtenu avec le dispositif selon la figure 1.

En référence aux figures annexées, la présente invention a pour objet un dispositif permettant de réaliser simultanément une pluralité de pièces moulées 10 avec au moins deux matériaux de moulage.

Le dispositif comporte un moule 20 comprenant essentiellement un plateau fixe 21 et un plateau mobile 22.

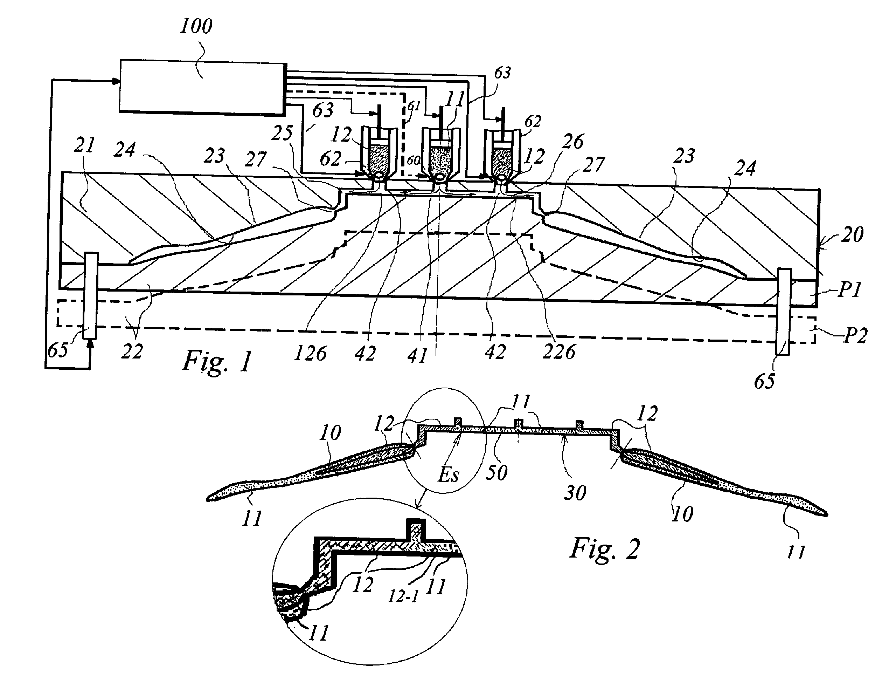

Le plateau mobile 22 est apte à prendre au moins deux positions P1, P2 par rapport au plateau fixe, comme illustré sur la figure 1.

Le dispositif comporte alors des moyens 65, schématiquement illustrés, pour faire passer le plateau mobile 22 de sa première position P1 à sa seconde position P2, et réciproquement. Ces moyens 65 sont par exemple constitués de vérins ou analogues connus en eux-mêmes. Ils ne seront donc pas plus amplement décrits ici.

La première position P1 du plateau mobile 22, illustrée en traits continus sur la figure 1, est celle dans laquelle le plateau mobile coopère avec le plateau fixe et définit, avec lui, une pluralité d'empreintes en creux globales 23, chaque empreinte en creux globale comportant une première partie 24 et une seconde partie 25. La première partie 24 constitue l'empreinte en creux d'une pièce à mouler 10, par exemple une cuillère, un couteau, un plateau, etc.... La seconde partie 25 constitue l'empreinte en creux d'un canal d'alimentation 126, 226, ... dont une première extrémité 27 débouche dans l'empreinte en creux 24 correspondant à une pièce à mouler 10, les secondes extrémités des canaux d'alimentation 126, 226; ... étant communes pour constituer une entrée d'alimentation unique 41 pour tous ces canaux d'alimentation 126, 226, ...

De préférence, ces canaux d'alimentation 126, 226,... sont situés dans un même plan et sont sensiblement régulièrement répartis, par exemple en étoile, autour de l'entrée d'alimentation unique 41, de façon à réaliser, lors de chaque mise en fonctionnement du dispositif de moulage comprenant ce moule, simultanément des dizaines, et plus, de pièces moulées 10.

Quant à la seconde position P2, elle est celle dans laquelle le plateau mobile 22 est éloigné du plateau fixe 21, comme représenté en traits interrompus sur la figure 1.

Le dispositif comporte une buse unique d'injection 60, qualifiée de "première" dans la présente description, pour injecter le premier matériau 11 dans les canaux d'alimentation 126, 226, ... du moule 20, la sortie de cette première buse étant reliée à l'entrée unique d'alimentation 41 de tous les canaux d'alimentation 126, 226, ....

Il comporte aussi une pluralité de buses d'injection 62, qualifiées ici de "secondes", pour injecter le second matériau 12, ces secondes buses alimentant respectivement les canaux d'alimentation 126, 226, ... en un point 42 situé entre la première extrémité 27 de chaque canal d'alimentation et l'entrée unique d'alimentation 41.

D'une façon générale, les buses d'injections 60, 62, qui correspondent à la partie chaude du moule, comportent un cylindre de buse dans lequel est déplacé un élément qui est constitué par exemple d'un piston ou d'une vis d'injection, actionné pour pousser le matériau à injecter 11, 12, et des moyens d'actionnement de cet élément pour obtenir en sortie l'injection du matériau. De telles buses d'injection sont connues en elles-mêmes et ne seront donc pas plus amplement décrites ici, dans l'unique souci de simplifier la présente description.

En plus, avec le schéma de la figure 1 illustrant ces buses 60, 62, leurs moyens d'injection et éventuellement leurs moyens d'obturation, complété par le contenu des documents cités au préambule de la présente description, les hommes du métier sauront très facilement les identifier, et les mettre en oeuvre.

Le dispositif selon l'invention comporte en outre des moyens commandables pour maintenir la pression d'injection du premier matériau en sortie de la première buse 60 à une valeur au moins égale à celle de la pression d'alimentation du second matériau quand ce second matériau est injecté simultanément par la pluralité des secondes buses 62 dans les canaux d'alimentation 126, 226, ... aux points 42.

Ces moyens commandables pour maintenir la pression d'injection du premier matériau en sortie de la première buse 60 à une valeur au moins égale à celle de la pression d'alimentation du second matériau peuvent être réalisés de différentes façons, notamment par blocage en position de l'élément pour pousser le matériau à injecter mentionné ci-dessus. Dans le cas où cet élément de cette première buse est un piston ou une vis d'injection, ces moyens peuvent très simplement être constitués par des moyens de blocage du piston ou de la vis d'injection. Ces moyens de blocage peuvent être, soit mécaniques, soit avantageusement électroniques, par exemple désactivant la commande électronique du déplacement du piston ou de la rotation de la vis d'injection.

De façon préférentielle, le dispositif comporte des moyens commandables 63 pour obturer les sorties des secondes buses d'injection 62 et leur interdire d'éjecter le second matériau, par exemple des clapets commandables qui sont bien connus en eux-mêmes par les hommes du métier dans la réalisation des moules.

Non essentiellement, bien que préférable notamment par sécurité, le dispositif peut comporter en outre des moyens commandables 61, illustrés en pointillés sur la figure 1, pour obturer la sortie de la première buse d'injection 60, non pas lors du fonctionnement du dispositif mais par exemple lors d'opérations de maintenance ou autres.

De façon possiblement avantageuse, le moule 20 comporte un diaphragme de diamètre restreint interposé entre l'empreinte en creux de chaque canal d'alimentation 126, 226, ... et l'empreinte en creux de la pièce à mouler 24 correspondante, ce diaphragme se formant quand le plateau mobile 22 est dans sa première position P1.

De façon classique, le dispositif comporte en outre des moyens pour récupérer la matière moulée 30, figure 2, dans les empreintes en creux globales 23, après refroidissement et solidification des matériaux injectés et lorsque le plateau mobile 22 est dans sa seconde position P2. Ces moyens de récupération de la matière moulée 30 sont par exemple constitués d'un doigt d'éjection, non illustré.

De façon avantageuse, le dispositif de moulage selon l'invention peut comporter des moyens de pilotage permettant de piloter toutes les opérations de moulage et de démoulage lors du fonctionnement du dispositif. Ces moyens de pilotage sont connus en eux-mêmes et ne seront pas plus amplement décrits ici dans l'unique souci de simplifier la description.

Les moyens commandables définis ci-dessus pour maintenir la pression d'injection du premier matériau en sortie de la première buse 60 et ces moyens de pilotage peuvent être intégrés dans un même organe de commande illustré schématiquement en 100 sur la figure 1.

Le fonctionnement du dispositif de moulage selon l'invention pour réaliser simultanément une pluralité de pièces à mouler 10 avec au moins deux matériaux de moulage 11, 12 est décrit ci-après dans une application, à titre d'exemple, à la réalisation d'un cuillère comme les deux exemplaires illustrés sur la figure 2, bien que le nombre de pièces obtenues en une seule opération de moulage puisse être beaucoup plus élevé, avec, comme premier matériau 11 : une matière plastique vierge et, comme second matériau 12 : une matière plastique recyclée.

Dans un premier temps, une première injection est effectuée avec du premier matériau de moulage 11 dans toutes les empreintes en creux 24 des pièces à mouler 10 via la première buse 60 et les canaux d'alimentation 126, 226,... pour obtenir un remplissage partiel de ces empreintes en creux 24, cette première injection s'effectuant à partir de l'entrée unique 41 de tous les canaux d'alimentation.

Puis, une seconde injection est commandée pour injecter le second matériau de moulage 12 et obtenir un remplissage complet des empreintes en creux 24 des pièces à mouler 10, cette seconde injection s'effectuant simultanément via toutes les secondes buses 62 et toutes les parties des canaux d'alimentation comprises entre les points 42 et les diaphragmes 27.

Cependant selon l'invention, pendant cette seconde injection, la pression dans la première buse 60 est maintenue sensiblement constante à une valeur au moins égale à celle de la pression d'injection du second matériau quand le second matériau est injecté, par exemple en bloquant le piston de la première buse 60 notamment pour empêcher le premier matériau 11 de remonter dans le cylindre de cette première buse 60.

Il est à souligner que, du fait de la structure du dispositif, quand le second matériau 12 est injecté par les secondes buses 62, presque toute la quantité injectée est introduite dans la partie de la pièce restant à mouler.

Il est cependant malgré tout possible qu'une petite partie de ce second matériau remonte dans les canaux d'alimentation 126, 226, ... en amont du point 42, en repoussant et en comprimant le premier matériau qui s'y trouve. Mais cette remontée se produit sur une toute petite distance, en fait jusqu'à ce que les pressions, entre le second matériau injecté et le premier qui est bloqué dans ces parties amonts de canaux, s'équilibrent, ce qui se produit très rapidement.

A titre illustratif, sur la figure 2, il a été représenté en 12-1 cette petite quantité de second matériau qui est remontée vers l'amont des canaux d'alimentation en repoussant le premier matériau.

Ce phénomène ne présente aucun inconvénient puisque toute la matière contenue dans les canaux constituent en fait la carotte définie ci-après, qui est en finale éliminée et, soit mise au rebus, soit recyclée pour produire du second matériau 12.

A la description donnée ci-dessus du fonctionnement du dispositif selon l'invention, il apparaît aisément que ce dispositif ne présente pas les inconvénients mentionnés ci-avant des dispositifs similaires de l'art antérieur et que, bien que son fonctionnement soit très simple, il permet de réaliser des séries successives d'une pluralité de pièces beaucoup plus rapidement qu'avec les dispositifs antérieurs.

Ensuite, de façon classique, quand les premier et second matériaux 11, 12 injectés dans les empreintes en creux globales 23 sont solidifiés, le plateau mobile 22 est commandé pour passer de sa première position P1 à sa seconde position P2, figure 1.

Puis, par exemple avec un doigt pousseur ou analogue de type connu, est récupérée toute la matière moulée 30 solidifiée dans les empreintes en creux globales 23, c'est-à-dire l'ensemble Es (figure 2) formé des pièces moulées solides 10 (au nombre de deux sur la figure 2, mais qui peuvent, en réalité, atteindre un nombre très important, par exemple une trentaine ou plus) et de la partie solidifiée 50 dite "carotte", solidaire des pièces moulées 10, cette carotte 50 correspondant aux matériaux injectés et solidifiés restant dans les canaux d'alimentation 126, 226, ....

Sur la partie de la figure 2 en effet de loupe, apparaissent de façon claire les deux matériaux 11 et 12, 12-1. Le matériau 12, 12-1, qui peut correspondre à une matière plastique recyclée, est représenté par des portions de hachures rectilignes, alors que le matériau 11, qui peut correspondre à une matière plastique vierge, est représenté par des points carrés.

Ensuite, bien entendu, les pièces moulées 10 sont séparées de la carotte 50 au niveau du diaphragme 27, le matériau constituant cette carotte pouvant être utilisé après recyclage pour reformer du second matériau 12.

Sur la figure 2, à titre d'exemple, la pièce moulée 10 est représentée par une cuillère telle qu'en général elle est obtenue après moulage, comportant une partie extérieure constituée de matière plastique vierge 11 et, dans le manche, un noyau de matière plastique recyclée 12 complètement noyé dans la matière plastique vierge et qui n'affleure à la surface de la cuillère qu'en un très petit point qui correspondait à la liaison entre la pièce à mouler 10 et la carotte 50. Ce point de matière plastique recyclée n'est en rien gênant car il est de très petites dimensions et il est situé à l'extrémité externe du manche, de sorte qu'il n'est jamais en contact, par exemple, avec de la nourriture.

Le dispositif de moulage selon l'invention permet donc d'obtenir les mêmes résultats que ceux obtenus avec les dispositifs de l'art antérieur, mais avec un gain de temps important qui se répercute sur le prix de revient des pièces réalisées. Il permet en outre de rentabiliser plus rapidement les moules dont il est connu que la conception et la fabrication sont très onéreuses.

## Revendications

1. Dispositif pour réaliser simultanément une pluralité de pièces moulées (10) avec au moins deux premier et second matériaux de moulage (11, 12), **caractérisé par le fait qu'**il comporte :
• un moule comprenant un plateau fixe (21) et un plateau mobile (22), ledit plateau mobile (22) étant apte à prendre au moins deux positions (P1, P2) par rapport au dit plateau fixe,
* la première position (P1) étant celle dans laquelle le plateau mobile définit, avec le plateau fixe, une pluralité d'empreintes en creux globales (23), chaque empreinte en creux globale comportant une première partie et une seconde partie, la première partie (24) constituant l'empreinte en creux d'une pièce à mouler (10) et la seconde partie (25) constituant l'empreinte en creux d'un canal d'alimentation (126, 226) dont une première extrémité (27) débouche dans l'empreinte en creux (24) correspondant à une pièce à mouler (10), les secondes extrémités des canaux d'alimentation (126, 226) étant communes pour constituer une entrée d'alimentation unique (41) pour tous ces canaux d'alimentation (126, 226),
* la seconde position (P2) étant celle dans laquelle ledit plateau mobile (22) est éloigné du plateau fixe (21),
• une première buse unique d'injection (60) pour injecter ledit premier matériau (11) dans les canaux d'alimentation (126, 226), la sortie de ladite première buse unique d'injection étant reliée à ladite entrée unique d'alimentation (41) des canaux d'alimentation (126, 226),
• une pluralité de secondes buses d'injection (62) pour injecter ledit second matériau (12) dans chacun des dits canaux d'alimentation (126, 226), en un point (42) situé entre la première extrémité (27) du dit canal d'alimentation (126, 226) et ladite entrée unique d'alimentation (41), et
• des moyens commandables pour maintenir la pression d'injection du premier matériau en sortie de la première buse d'injection (60) à une valeur au moins égale à celle de la pression d'alimentation du second matériau quand ce second matériau est injecté simultanément par la pluralité des secondes buses d'injection (62) dans lesdits canaux d'alimentation (126, 226) aux dits points (42).

2. Dispositif selon la revendication 1, **caractérisé par le fait qu'**il comporte des moyens commandables (63) pour obturer lesdites secondes buses d'injection (62).

3. Dispositif selon l'une des revendications 1 et 2, **caractérisé par le fait qu'**il comporte des moyens commandables (61) pour obturer ladite première buse d'injection (60).

4. Dispositif selon l'une des revendications 1 à 3, **caractérisé par le fait que** le moule comporte un diaphragme de diamètre restreint interposé entre chaque empreinte en creux d'un canal d'alimentation (126, 226) et l'empreinte en creux de la pièce à mouler (24) correspondante.

5. Dispositif selon l'un des revendications précédentes, **caractérisé par le fait qu'**il comporte des moyens pour récupérer la matière moulée (30) dans les empreintes en creux globales (23), après refroidissement et solidification des matériaux injectés et lorsque ledit plateau mobile (22) est dans sa seconde position (P2).
